# EUROPEAN PATENT SPECIFICATION

(11) **EP 2 975 613 B1**
(45) Date of publication and mention of the grant of the patent: **22.08.2018**
(21) Application number: 14764284.7
(22) Date of filing: 21.02.2014
(51) Int. Cl.: G21C 19/08, G21C 19/07, F28D 15/02, G21C 19/32, G21F 5/10, G21F 9/36

(54) **COOLING SYSTEM FOR STORED NUCLEAR FUEL**
KÜHLSYSTEM FÜR GESPEICHERTEN KERNBRENNSTOFF
SYSTÈME DE REFROIDISSEMENT POUR COMBUSTIBLE NUCLÉAIRE STOCKÉ

(30) Priority: 14.03.2013 JP 2013051887
(43) Date of publication of application: 20.01.2016
(73) Proprietor: Fujikura Ltd., Tokyo 135-8512 (JP)
(72) Inventor: MOCHIZUKI, Masataka, Tokyo 135-8512 (JP); RANDEEP, Singh, Tokyo 135-8512 (JP); MATSUDA, Masahiro, Tokyo 135-8512 (JP)
(74) Representative: TBK
(86) International application number: PCT/JP2014/054117
(87) International publication number: WO 2014/141853

(56) References cited:
- WO-A1-02/073099
- DE-B1- 2 823 376
- JP-A- S54 156 998
- JP-A- 2007 256 230
- JP-A- 2012 230 079
- JP-A- 2013 057 578
- US-A- 4 249 518
- US-A1- 2004 098 998
- US-A1- 2012 294 407

## Description

### TECHNICAL FIELD

This invention relates to a system for cooling nuclear fuel stored in a cooling pool by radiating decay heat of the nuclear fuel.

### BACKGROUND ART

Japanese Patent Laid-Open No. 11-183695 describes one example of the system of this kind. In the facility taught by Japanese Patent Laid-Open No. 11-183695, a main body is held on a floating structure floating on the ocean, and an outer face of the main body is cooled by the ocean water. The main body is divided by a partition wall into an upper spent fuel pool and a lower coolant pool. The spent fuel is held in a storage pipe in which an upper end is fixed to the partition wall and a lower end is immersed in the coolant so that the coolant warmed by the spent fuel can be cooled by exchanging heat indirectly with the ocean water. Thus, according to the teachings of Japanese Patent Laid-Open No. 11-183695, the spent fuel can be stored on the ocean while being cooled.

Facilities for cooling the nuclear fuel by transporting heat of the stored nuclear fuel to outside through a heat pipe are described in Japanese Patent Laid-Opens Nos. 54-156998 (equivalent to DE 28 23 376 B1) and 2012-230079 (equivalent to US 2012/294407 A1). In any of the facilities taught by those prior art documents, a lower end of the heat pipe is immersed into water in a fuel pool or filler material received in a storage box, and an upper end of the heat pipe is held in a duct or chimney erected adjacent to the fuel pool or the storage box. Accordingly, the water in the fuel pool or the filler material in the storage box is warmed by the nuclear fuel, and heat thereof is transported to the duct or the chimney through the heat pipe to be radiated to the external environment.

Japanese Patent Laid-Open No. 2007-256230 describes a fuel reactor adapted to utilize heat of spent fuel to generate electricity. According to the teachings of Japanese Patent Laid-Open No. 2007-256230, the nuclear fuel stored in a fuel container is melted by decay heat of the spent fuel. Cooling water enclosing the fuel container is evaporated also by the decay heat, and a turbine is driven by the vapor of the cooling water. Internal heat of the fuel container is transmitted to the vapor of the cooling water through a heat pipe.

One example of a heat storage system adapted to store solar heat in water in a pool is described in international publication No. WO 02/073099 (equivalent to US 2004/098998 A1). The pool taught by WO 02/073099 is called as a solar pond, and the water in the solar pond is consisting of an upper layer in which salinity concentration is low and a lower layer for storing the solar heat in which salinity concentration is high.

The cooling water for the nuclear fuel migrates upwardly in the pool with a reduction in its density caused by an increment in its volume resulting from temperature rise, and migrates downwardly in the pool with an increment in its density caused by a reduction in its volume resulting from temperature drop. That is, in the facilities taught by Japanese Patent Laid-Open Nos. 11-183695, 54-156998 and 2012-230079, temperature of the cooling water would be raised to be higher in the vicinity of a water surface as a result of convection. Consequently, the cooling water would be evaporated promptly in the vicinity of the water surface and hence a water level in the pool would be lowered to a level at which the nuclear fuel is exposed to the air. Especially, in the facility taught by Japanese Patent Laid-Open No. 11-183695, the spent nuclear fuel is not sunk to a bottom of the pool and hence a temperature difference between the spent fuel and the cooling water therearound is small. For this reason, a cooling efficiency of the spent nuclear fuel by the cooling water would be down.

The fuel reactor taught by Japanese Patent Laid-Open No. 2007-256230 is not adapted to store the spent nuclear fuel but adapted to continue nuclear reaction. Therefore, it cannot be applied to the storing facility of the spent nuclear fuel to be conveyed or rejected. Likewise, since the solar pond taught by WO 02/073099 is adapted to store the solar heat therein, it cannot be applied to the cooling system of the spent nuclear fuel developing heat inevitably.

Further prior art is discussed in US 4 249 518 A, describing a method and apparatus for maintaining a substantially constant salt density gradient in a non-convecting salt gradient pond.

### DISCLOSURE OF THE INVENTION

The present invention has been conceived noting the above-mentioned technical problems, and it is therefore an object of the present invention is to provide a cooling system that can effectively cool nuclear fuel stored in a pool while preventing lowering of water level in the pool resulting from evaporation of the water. The object is achieved by a cooling system having the features of independent claim 1. Further advantageous developments are set out in the dependent claims.

The present invention relates to a cooling system for cooling nuclear fuel stored in the bottom of a pool filled with cooling water. In order to achieve the above-explained objective, in the cooling system, the cooling water comprises an upper layer formed in a water surface side in which a density of the cooling water is low, a lower layer formed in the bottom side of the pool in which a density of the cooling water is high, and an intermediate layer in which a density of the cooling water is in between those of the cooling waters in the upper layer and the lower layer. A lower end of a heat pipe adapted to transport heat in the form of latent heat of working fluid is situated at a site where the heat is exchanged with the cooling water, and an upper end of the heat pipe is exposed to external air. In addition, the nuclear fuel is stored within the lower layer.

In the cooling system thus structured, the heat developed by the nuclear fuel is drawn by the cooling water of high density forming the lower layer and hence the nuclear fuel is cooled. Temperature rise in the cooling water of high density can be prevented by transmitting heat thereof to the lower end of the heat pipes. In the heat pipe, temperature of the lower end is raised to evaporate the working fluid, and the vapor of the working fluid flows toward the upper end exposed to the external air. Consequently, heat of the vapor is radiated from the upper end portion of the heat pipe cooled by the external air and condensed again. Thus, the cooling water forming the lower layer is radiated to the external air through the heat pipes so that the nuclear fuels can be cooled. As a result of temperature rise in the cooling water forming the lower layer by the heat of the nuclear fuel, convection of the cooing water is created in the lower layer. However, since the density of the cooling water, that is, diffusion coefficient of the cooling water is differentiated in each layer, convection of the cooling water is caused only within the lower layer. That is, double-diffusive convection is created in the pool. For this reason, the heat developed by the nuclear fuel stays within the lower layer and radiated to the external air through the heat pipe so that the nuclear fuel can be cooled efficiently. In addition, temperature rise at the water surface of the cooling water can be prevented so as to suppress evaporation of the cooling water. For this reason, water level of the cooling water can be maintained easily in the pool. In addition, since the cooling water is cooled by the heat pipes, heat radiation trough the heat pipes can be continued even if an electric supply is interrupted due to trouble. For this reason, temperature rise in the cooling water can be prevented so that the nuclear fuels can be cooled sufficiently and continuously.

Specifically, brine prepared by dissolving salt in water may be used as the cooling water, and the brine having high concentration forms the lower layer. The intermediate layer is formed by the brine whose concentration is lower than that of the brine forming the lower layer, and the upper layer is formed by the brine whose concentration is lower than that of the brine forming the intermediate layer or by water that does not contain salt.

In the cooling system, therefore, the cooling water in the pool storing the nuclear fuels can be divided easily into the above-explained upper layer, the intermediate layer and the lower layer.

Specifically, the density of the cooling water forming the lower layer of a case in which a temperature thereof is raised by heat of the nuclear fuel is higher than that of the cooling water forming the upper layer and having low density.

In the cooling system, therefore, the upper layer, the intermediate layer and the lower layer can be maintained stably.

One of the end portions of the heat pipe is situated within the lower layer in the pool.

In the cooling system, therefore, the cooling water may be brought into contact directly with the lower end of the heat pipe so that thermal resistance therebetween can be reduced to cool the nuclear fuels efficiently.

Said one of the end portions of the heat pipe may also be buried inside of a frame of the pool.

In this case, the heat pipes can be prevented from being radiated so that it is advantageous to reduce damage of the heat pipes.

### BRIEF DESCRIPTION OF THE DRAWINGS

Fig. 1 is a schematic illustration showing one example of the cooling system according to the present invention.
Fig. 2 is a schematic illustration showing salt concentration distribution in the pool of the cooling system.
Fig. 3 is a graph plotting salinity concentrations in a depth direction of the pool filled with sodium chloride solution in which a heat source is situated at the bottom.
Fig. 4 is a graph plotting temperature distributions in the pool.
Fig. 5 is a schematic illustration showing another example of the cooling system according to the present invention.

### DESCRIPTION OF THE PREFERRD EMBODIMENT(S)

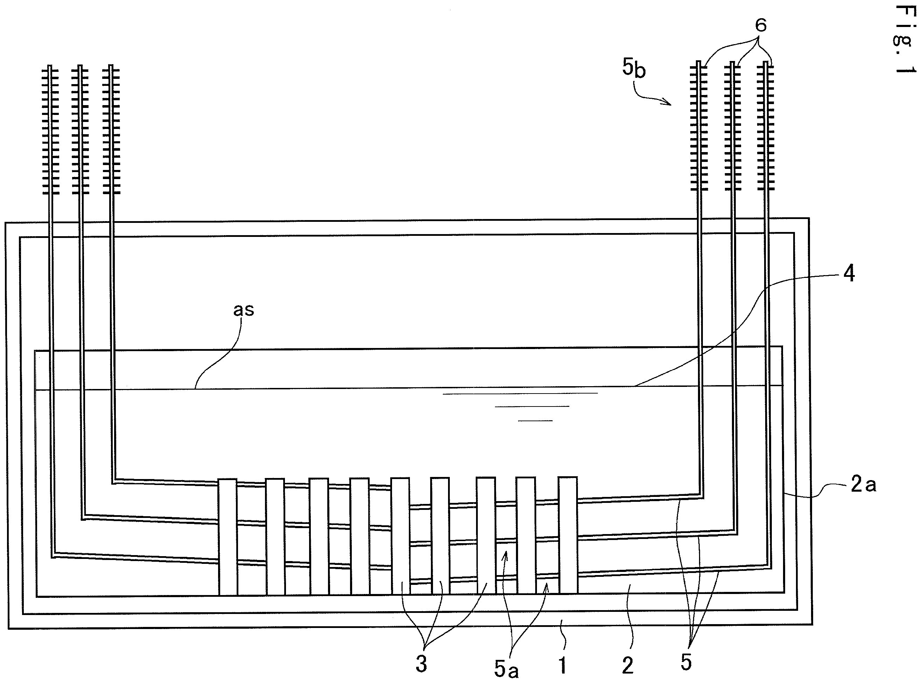

Preferred examples of the present invention will be explained hereinafter. Referring now to Fig. 1, there is shown one example of the cooling system for stored nuclear fuel having a housing 1 and a pool 2 arranged therein. Specifically, the housing 1 is a closed chamber that is normally closed to be insulated from outside. For example, a frame 2a of the pool 2 is formed of concrete, and filled with ample amount of cooling water 4 to immerse nuclear fuel 3 held in a not shown rack. The nuclear fuel 3 includes both spent nuclear fuel and unspent nuclear fuel, and the nuclear fuel 3 is stored at a bottom of the pool 2. In the example shown in Fig. 1, one ends (i.e., lower ends) 5a of heat pipes 5 are situated around the nuclear fuels 3, and other ends (i.e., upper ends) 5b of the heat pipes 5 are situated outside of the housing (to be exposed to the external air). In order to enlarge radiation area, a plurality of fins 6 are arranged on the other end 5b of each heat pipe 5. Thus, according to the example shown in Fig. 1, heat developed by the nuclear fuels 3 is radiated to the external air through the heat pipes 5.

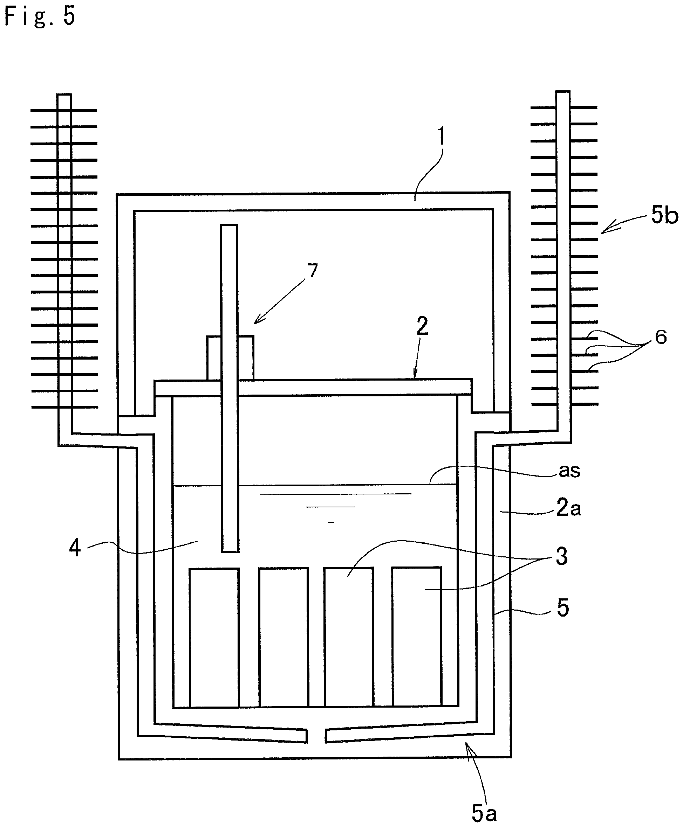

Fundamental structure of the heat pipe 5 is known in the conventional arts. Specifically, the heat pipe 5 comprises a container from which non-condensable gas such as air is evacuated, and working fluid evaporated and condensed within predetermined temperature ranges is encapsulated in the container. That is, the container is a hollow receptacle such as a pipe. In order to exchange an internal heat and an external heat, the container is preferably made of material having excellent heat conductivity such as a copper pipe and a stainless pipe. Optionally, a wick and grooves may be arranged in the container to expedite circulation of the working fluid by a capillary pumping. The working fluid is evaporated when it is heated and condensed when radiating heat therefrom, that is, the working fluid transports heat in the form of latent heat. For example, water, alcohol, hydrochlorofluorocarbon and so on may be used as the working fluid. In the heat pipe 5, specifically, evaporation of the working fluid takes place at a heated site, and resultant vapor of the working fluid flows toward a cooled site where a temperature and a pressure are relatively low. The heat of the working fluid is radiated from the cooled site and the working fluid is condensed again. In the heat pipe 5 shown in Fig. 5, the lower end 5a serves as the evaporating portion at which evaporation of the working fluid takes place, and the upper end 5b serves as the condensing portion at which heat radiation and condensation of the working fluid take place.

In the cooling system according to the preferred example, brine adjusted to a desired salinity is used as the cooling water 4. High density brine forms a lower layer in the bottom of the pool 2, and low density brine or (water that does not contain salt) forms an upper layer in the vicinity of water surface "as". In the flowing explanation, the former layer will be referred to as the lower layer LCZ, and the latter layer will be referred to as the upper layer UCZ. An intermediate layer NCZ is formed between the lower layer LCZ and the upper layer UCZ to maintain a desired salinity gradient therebetween. For example, sodium chloride, magnesium chloride, calcium chloride and so on may be used to prepare the brine. Thus, the cooling water 4 comprises the lower layer LCZ, the intermediate layer NCZ, and the upper layer UCZ having different diffusion coefficient.

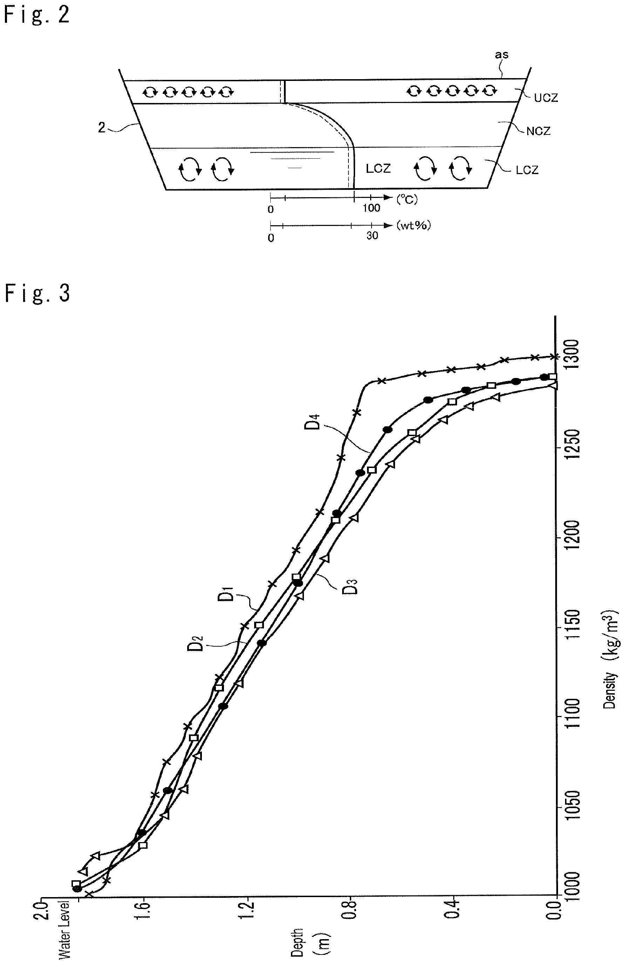

Turning to Fig. 2, there is shown an example of salt concentration distribution in the pool 2. For example, salinity in the lower layer LCZ falls within a range from 15wt to 30wt%, and the spent nuclear fuel 3 is stored in the lower layer LCZ. By contrast, salinity in the upper layer UCZ is lower than that in the lower layer LCZ, specifically, falls within a range from 5wt% to 10wt%. Thickness of the upper layer UCZ is thinner than that of the lower layer LCZ.

The density of the brine forming the lower layer LCZ is adjusted to be higher than that of the brine forming the intermediate layer NCZ under a condition that the temperature thereof is raised. In the pool 2 shown in Fig. 2, convection is created in both the upper layer UCZ and the lower layer LCZ, but is not created in the intermediate layer NCZ. That is, according to the present invention, double-diffusive convection is created in the pool 2 and hence the convection current will not be created entirely in the pool 2. Such water layers having different densities or salinity concentrations may be formed by a same procedure to form the water layers in the conventional solar ponds. First of all, the pool 2 is filled with the cooling water 4 of high density (or high concentration) to a level sufficient to immerse nuclear fuel 3 entirely to form the lower layer LCZ. After the convection almost stops, the pool 2 is further filled with the cooling water 4 of intermediate density (or medium concentration) to form the intermediate layer NCZ on the lower layer LCZ. At this step, in order not to disturb the cooling water 4 forming the lower layer LCZ excessively, and to prevent the cooling water 4 of intermediate density (or medium concentration) from being admixed with the cooling water 4 of high density (or high concentration), the cooling water 4 of intermediate density (or medium concentration) is poured in the pool 2 in a gentle manner. Then, after the convection of the cooling water 4 of intermediate density (or medium concentration) almost stops, the pool 2 is further filled with the cooling water 4 of low density (or low concentration) to form the upper layer UCZ on the intermediate layer NCZ. At this step, in order not to disturb the cooling water 4 forming the intermediate layer NCZ excessively, and to prevent the cooling water 4 of low density (or low concentration) from being admixed with the cooling water 4 of intermediate density (or medium concentration), the cooling water 4 of low density (or low concentration) is poured in the pool 2 in a gentle manner. Thus, the lower layer LCZ, the intermediate layer NCZ and the upper layer UCZ are formed by letting the cooling water 4 stand in the pool 2 during and after filling without applying any external force such as vibrations and agitation force. The cooling water 4 of each concentration may be refilled to each layer according to need.

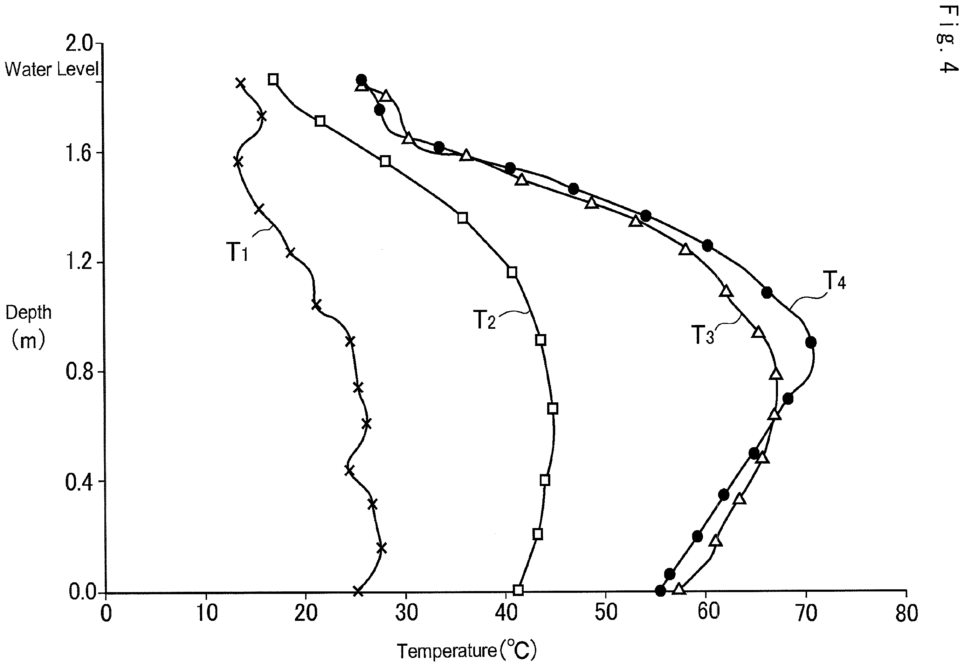

Turning now to Figs. 3 and 4, there are shown density distribution and temperature distribution in the pool filled with sodium chloride solution divided into a plurality of layers. The density distribution and the temperature distribution shown therein were measured in a depth direction of the pool in which a depth was 2.0 m and a diameter was 8.0 m. The pool was filled almost fully with the brine, and a solar collector as a heat source was situated at a bottom of the pool. In Fig. 3, line D1 represents the density distribution of a case in which a calorific value was small (i.e., an intensity of solar light was weak), line D2 represents the density distribution of a case in which a calorific value was medium (i.e., an intensity of solar light was medium), and lines D3 and D4 respectively represent the density distribution of a case in which a calorific value was large (i.e., an intensity of solar light was strong). In Fig. 4, line T1 represents the temperature distribution of a case in which the density distribution represented by the line D 1 shown in Fig. 3 was measured, line T2 represents the temperature distribution corresponding to the line D2 shown in Fig. 3, and lines T3 and T4 represent the temperature distributions corresponding to the lines D3 and D4 shown in Fig. 3. Here, in order to clarify the difference in the calorific value (i.e., the intensity of solar light) situated at the bottom of the pool, those density distributions and the temperature distributions were measured at 3 to 4 months intervals. As can be seen from Figs. 3 and 4, temperature rise of the brine by the heat of the solar collector occurs only within the lower layer where the density (i.e., saline concentration) was high. In addition, convection of the brine resulting from a temperature rise thereof was caused also only within the lower layer.

As described, the nuclear fuel 3 immersed in the lower layer LCZ develops decay heat, and the cooling water 4 is warmed by the decay heat thereby creating the convection. Consequently, the cooling water of high temperature and high saline concentration forms the lower layer LCZ, and the cooling water of low temperature and low saline concentration forms the upper layer thereon. That is, the convection of the cooling water 4 is created only within the lower layer LCZ formed on the bottom of the pool 2 and hence the heat developed by the nuclear fuel 3 remains within the lower layer LCZ. As described, the lower ends 5a of the heat pipes 5 are situated in the bottom side of the pool 2 to exchange heat with the cooling water 4 so that the decay heat of the nuclear fuel 3 is transmitted to the heat pipe 5 through the cooling water 4 to be radiated therefrom to the external air. Since most of the heat of the nuclear fuel thus remains within the lower layer LCZ in this situation and the lower ends 5a of the heat pipes 5 are immersed directly in the cooling water 4, thermal resistance between the cooling water 4 and the heat pipe 5 can be reduced so that heat transmitting efficiency to the heat pipe 5 can be improved. Consequently, cooling efficiency of the nuclear fuels 3 through the heat pipes 5 can be improved. By contrast, in the upper layer UCZ, the cooling water 4 is not disturbed by the convection occurs in the lower layer LCZ, and the heat is not transmitted significantly thereto through the intermediate layer NCZ. For these reasons, temperature of the upper layer UCZ is kept to a low level and hence the evaporation of the cooling water 4 at the water surface as can be suppressed.

Turning now to Fig. 5, there is shown another example of the cooling system in which the lower end 5a of the heat pipe 5 is situated inside of a bottom of the frame 2a of the pool 2. In Fig. 7, reference numeral 7 represents a crane for carrying the nuclear fuels 3 into the pool 2 and out of the pool 2.

According to the example shown in Fig. 5, the heat of the nuclear fuel 3 remains within the lower layer LCZ formed on the bottom of the pool 2 so that the heat pipe 5 absorbs heat efficiently as the example shown in Fig. 1. Moreover, since the lower end 5a of the heat pipe 5 is held in the bottom of the frame 2a, capacity of the pool 2 for storing the nuclear fuels 3 can be ensured sufficiently. Further, since the heat pipe 5 are not brought into contact directly with the cooling water 4, the heat pipes 5 can be prevented from being radiated so that lifetime of the heat pipes 5 can be elongated. Furthermore, since the temperature of the upper layer UCZ is kept to the low level as the example shown in Fig. 1, the evaporation of the cooling water 4 at the water surface can be suppressed.

Thus, in the cooling system according to the present invention, the nuclear fuels 3 are stored at a bottom of the pool 2, and the heat developed by the nuclear fuels 3 is maintained within the bottom side of the pool 2 by the double-diffusive convection. In addition, the evaporating portions 5a of the heat pipes 5 are situated in the bottom side of the pool 2. Therefore, the nuclear fuels 3 can be cooled efficiently by absorbing and transporting the heat thereof by the heat pipes 5. For this reason, temperature rise at the water surface as of the cooling water 4 can be suppressed thereby preventing lowering of the water level in the pool 2. That is, according to the present invention, the water level of the cooling water can be maintained easily in the pool 2 storing the nuclear fuels 3. In addition, since the cooling water is cooled by the heat pipes 5, heat radiation trough the heat pipes 5 can be continued even if an electric supply is interrupted due to trouble. For this reason, evaporation of the cooling water can be prevented so that lowering of the water level in the pool 2, exposure of the nuclear fuels 3 from the water surface as, melting of a casing of the nuclear fuel 3 and so on can be prevented.

### REFERENCE SIGNS LIST

2 ... pool, 2a ... frame, 3 ... nuclear fuel, 4 ... cooling water, 5 ... heat pipe, 5a ... evaporating portion, 5b ... condensing portion, UCZ ... upper layer, LCZ ... lower layer.

## Claims

1. A cooling system for cooling nuclear fuel (3) stored at the bottom of a pool (2) filled with chloride aqueous solution (4), wherein
a lower end (5a) of a heat pipe (5) adapted to transport heat in the form of latent heat of working fluid encapsulated in the heat pipe (5) is situated at a site where the heat is exchanged with the solution (4), and an upper end (5b) of the heat pipe (5) is exposed to external air,
**characterized in that**:
the solution (4) in the pool (2) storing the nuclear fuel (3) is divided into an upper layer (UCZ) formed in a water surface (as) side, a lower layer (LCZ) formed in the bottom side of the pool (2), and an intermediate layer (NCZ) formed between the lower layer (LCZ) and the upper layer (UCZ),
the density of the solution (4) forming the lower layer (LCZ) is adjusted to be higher than that of the solution (4) forming the intermediate layer (NCZ),
the density of the solution (4) forming the upper layer (UCZ) is lower than that of the solution (4) forming the intermediate layer (NCZ), and
the nuclear fuel (3) is stored within the lower layer (LCZ).

2. The cooling system for cooling nuclear fuel as claimed in claim 1,
wherein the solution (4) forming the lower layer (LCZ) includes brine prepared by dissolving salt in water having high concentration;
wherein the solution (4) forming the intermediate layer (NCZ) includes brine prepared by dissolving salt in water having concentration lower than that of the brine forming the lower layer (LCZ); and
wherein the solution (4) forming the upper layer (UCZ) includes brine prepared by dissolving salt in water having concentration lower than that of the brine forming the intermediate layer (NCZ), or by water that does not contain salt.

3. The cooling system as claimed in claim 1 or 2, wherein the density of the solution (4) forming the lower layer of a case in which a temperature thereof is raised by heat of the nuclear fuel (3) is higher than that of the solution (4) forming the upper layer (UCZ) and having low density.

4. The cooling system as claimed in any of claims 1 to 3, wherein the lower end portion (5a) of the heat pipe (5) is situated within the lower layer in the pool.

5. The cooling system as claimed in any of claims 1 to 4, wherein the lower end portion of the heat pipe (5) is situated inside of a frame of the pool.

## Patentansprüche

1. Kühlsystem zum Kühlen von Kernbrennstoff (3), der an dem Boden von einem mit wässriger Chloridlösung (4) gefüllten Becken gelagert ist, wobei
ein unteres Ende (5a) eines Wärmeleitrohrs (5), das angepasst ist, um Wärme in der Form von latenter Wärme eines in dem Wärmeleitrohr (5) eingeschlossenen Arbeitsfluids zu transportieren, an einer Stelle platziert ist, wo die Wärme mit der Lösung (4) ausgetauscht wird, und ein oberes Ende (5b) des Wärmeleitrohrs (5) einer Außenluft ausgesetzt ist,
**dadurch gekennzeichnet, dass**:
die Lösung (4) in dem Becken (2), das den Kernbrennstoff (3) lagert, in eine obere Schicht (UCZ), die an einer Seite einer Wasseroberfläche (as) ausgebildet ist, eine untere Schicht (LCZ), die an der Seite des Bodens des Beckens (2) ausgebildet ist, und eine Zwischenschicht (NCZ) geteilt ist, die zwischen der unteren Schicht (LCZ) und der oberen Schicht (UCZ) ausgebildet ist,
die Dichte der Lösung (4), die die untere Schicht (LCZ) ausbildet, höher als die der Lösung (4) eingestellt ist, die die Zwischenschicht (NCZ) ausbildet,
die Dichte der Lösung (4), die die obere Schicht (UCZ) ausbildet, niedriger als die der Lösung (4) ist, die die Zwischenschicht (NCZ) ausbildet, und
der Kernbrennstoff (3) innerhalb der unteren Schicht (LCZ) gelagert ist.

2. Kühlsystem zum Kühlen von Kernbrennstoff gemäß Anspruch 1,
wobei die Lösung (4), die die untere Schicht (LCZ) ausbildet, eine durch Lösen von Salz in Wasser zubereitete Salzlösung enthält, die eine hohe Konzentration hat;
wobei die Lösung (4), die die Zwischenschicht (NCZ) ausbildet, eine durch Lösen von Salz in Wasser zubereitete Salzlösung enthält, die eine Konzentration hat, die niedriger als die der Salzlösung ist, die die untere Schicht (LCZ) ausbildet; und
wobei die Lösung (4), die die obere Schicht (UCZ) ausbildet, eine Salzlösung enthält, die durch Lösen von Salz in Wasser mit einer niedrigeren Konzentration als die Salzlösung, die die Zwischenschicht (NCZ) ausbildet, oder durch Wasser, das kein Salz enthält, zubereitet ist.

3. Kühlsystem gemäß Anspruch 1 oder 2, wobei die Dichte der Lösung (4), die die untere Schicht ausbildet, in einem Fall, bei dem deren Temperatur durch Wärme des Kernbrennstoffs (3) erhöht wird, höher als die der Lösung (4) ist, die die obere Schicht (UCZ) ausbildet und eine niedrige Dichte hat.

4. Kühlsystem gemäß einem der Ansprüche 1 bis 3, wobei der untere Endabschnitt (5a) des Wärmeleiterrohrs (5) innerhalb der unteren Schicht in dem Becken platziert ist.

5. Kühlsystem gemäß einem der Ansprüche 1 bis 4, wobei der untere Endabschnitt des Wärmeleitrohrs (5) im Inneren eines Rahmens des Beckens platziert ist.

## Revendications

1. Système de refroidissement pour le refroidissement de combustible nucléaire (3) stocké au fond d'une piscine (2) remplie de solution aqueuse de chlorure (4), dans lequel
une extrémité inférieure (5a) d'un caloduc (5) adapté pour transporter la chaleur sous forme de chaleur latente de fluide de travail encapsulé dans le caloduc (5) est située sur un site où la chaleur est échangée avec la solution (4), et une extrémité supérieure (5b) du caloduc (5) est exposée à l'air externe,
**caractérisé en ce que** :
la solution (4) dans la piscine (2) stockant le combustible nucléaire (3) est divisée en une couche supérieure (UCZ) formée dans un côté de surface d'eau (as), une couche inférieure (LCZ) formée dans le côté inférieur de la piscine (2), et une couche intermédiaire (NCZ) formée entre la couche inférieure (LCZ) et la couche supérieure (UCZ),
la densité de la solution (4) formant la couche inférieure (LCZ) est ajustée de sorte à être supérieure à celle de la solution (4) formant la couche intermédiaire (NCZ),
la densité de la solution (4) formant la couche supérieure (UCZ) est inférieure à celle de la solution (4) formant la couche intermédiaire (NCZ), et
le combustible nucléaire (3) est stocké dans la couche inférieure (LCZ).

2. Système de refroidissement pour le refroidissement de combustible nucléaire selon la revendication 1,
dans lequel la solution (4) formant la couche inférieure (LCZ) inclut de la saumure préparée par dissolution du sel dans de l'eau présentant une concentration élevée ; dans lequel la solution (4) formant la couche intermédiaire (NCZ) inclut de la saumure préparée par dissolution du sel dans de l'eau présentant une concentration inférieure à celle de la saumure formant la couche inférieure (LCZ) ; et
dans lequel la solution (4) formant la couche supérieure (UCZ) inclut de la saumure préparée par dissolution du sel dans de l'eau présentant une concentration inférieure à celle de la saumure formant la couche intermédiaire (NCZ), ou par de l'eau qui ne contient pas de sel.

3. Système de refroidissement selon la revendication 1 ou 2, dans lequel la densité de la solution (4) formant la couche inférieure d'un revêtement dans lequel une température de celle-ci est augmentée par la chaleur du combustible nucléaire (3) est supérieure à celle de la solution (4) formant la couche supérieure (UCZ) et présentant une densité faible.

4. Système de refroidissement selon l'une quelconque des revendications 1 à 3, dans lequel la portion d'extrémité inférieure (5a) du caloduc (5) est située dans la couche inférieure dans la piscine.

5. Système de refroidissement selon l'une quelconque des revendications 1 à 4, dans lequel la portion d'extrémité inférieure du caloduc (5) est située à l'intérieur d'un cadre de la piscine.
